# EUROPEAN PATENT SPECIFICATION

(11) **EP 0 583 912 B1**
(45) Date of publication and mention of the grant of the patent: **21.10.1998**
(21) Application number: 93306137.6
(22) Date of filing: 03.08.1993
(51) Int. Cl.: F16L 55/26, E21B 23/08, E21B 33/076, B08B 9/06

(54) **Pipeline system and use of a pig in such a pipeline system**
Rohrleitungsanordnung und Einsatz eines Rohrmolches in einer solchen Rohrleitungsanordnung
Tuyauterie et utilisation d'un racleur dans une telle tuyauterie

(30) Priority: 03.08.1992 BR 9203008; 26.04.1993 BR 9203008
(43) Date of publication of application: 23.02.1994
(73) Proprietor: PETROLEO BRASILEIRO S.A. - PETROBRAS, Rio de Janeiro (BR)
(72) Inventor: Da Silva, José Eduardo Mendonça, Bandeirantes 22795-270, Rio de Janeiro (BR); Gomes, Marcelino Guedes Ferreira Mosqueira, Rio de Janeiro (BR); Nagle, Fernando José Medeiros, Rio de Janeiro (BR)
(74) Representative: Barlow, Roy James

(56) References cited:
- GB-A- 2 166 513
- US-A- 3 422 895
- US-A- 3 428 489
- US-A- 3 637 012
- US-A- 3 682 186
- US-A- 4 528 041

## Description

The present invention relates to a pipeline system and to a process for pigging such a pipeline system. The invention uses an interchangeable accessory module, to be installed in engagement with the pipeline system controlling/carrying fluid material, to enable the connection between two lines to allow the application of a pig.

More specifically, it relates to passing a pig through pipe carrying oil from a production well, where the pipe may be clogged by the formation of crystallised material, known as wax, and may thus have a reduced capacity for flow of the fluid material or may even stop flow. The use of the equipment of the invention enables a pig to travel to the obstructed location, to remove the undesirable formation of deposit and to return to a place close to the point where it was introduced into said pipe.

Hitherto, one of the most efficient methods for mechanically removing undesirable material accumulated inside a fluid-carrying piping has been the scraping of the inside portion of said piping by means of a travelling member, called a pig, as is well known to those skilled in the art.

The term "pig" is universally adopted to denote a device which is passed through pipelines, not just for removing products from a pipe by scraping, but may be employed to separate products in order (i) to minimize contamination, (ii) to drive fluids inside a piping, (iii) to calibrate the piping diameter or (iv) to determine its working volume, apart from other applications that may arise to cope with new problems.

A pig is a body made of a polymeric material, generally in the shape of a cylinder or a sphere, or is a combination of parts, also of polymeric material, in the shape of discs joined by a common shaft, which can be made of the same material or of metal or articulated, and said discs of polymeric material can also have, between them, abrasive parts in the shape of discs or of abrasive straps applied over the cylindrical member or inserted between the discs. Such pig can be made of elastomeric polymers having a stable structure or a foamed nature enabling a reasonable elastic deformation.

The technique of applying said pig comprises:
(i) introducing it into an opening in said pipe, which we will refer to as the "inlet connection";
(ii) once said opening has been sealed by any suitable means, applying behind the pig a fluid under a relatively high pressure to drive the pig to "travel" inside the piping, thus dragging in front of it the material to be displaced; and
(iii) at a certain point in the pipe, when the whole pipe length or the desired portion of it has been travelled over, taking the pig out through an opening, which we will refer to as the "outlet connection".

Before the pig is removed at the outlet opening, the material dragged along by its "travel" will also have been removed.

Current practice provides for the pig to be sent in one direction inside the pipe and withdrawn at the end of the travel. However it so happens that in areas that are difficult to reach, such as a pipe connected to an oil-producing well located in deep waters (as deep as 1 km or more), it is easy to reach the "inlet connection" which is located on the surface (such as a platform), but not to reach the "outlet connection". In such cases, when clogging occurs in a production line as a result of "wax" formation, the solution adopted, although apparently extremely drastic and inefficient, consists of hoisting the pipe to the surface and provisionally replacing the obstructed run to allow it to be cleaned by convenient means, usually by passing a pig as described above. It is easy to visualize the considerable cost of replacing an undersea line, as well as the loss of time and the delay in the production of oil.

To overcome this obstacle, there has been developed in the prior art, among other concepts which are not relevant for an understanding of the present invention, the pig passing concept referred to as "pigging loop". However, within this concept current practice only provides for the connection of two lines having the same diameter incorporated into the design of an undersea equipment close to an oil-producing well (e.g., a Christmas tree or a template manifold) so that a pig can be sent out through one of them and returned through the other. With this design option the production line has, compulsorily and permanently, the same diameter as the water and/or gas injection line (or a secondary production line or also an additional service line).

Although progress has been made in facilitating pigging operations in pipes having portions that are difficult to reach, such as the offshore oil production pipes as described above, there remains the drawback of poor operational flexibility for definite modifications are required to the internal design of undersea equipment (e.g., a Christmas tree or a template manifold) and there is a need for lines to have the same diameter, for the pig circulation, even in those cases where use of such a pig is not necessary in view of the inherent characteristics of the fluid being carried. This causes a significant, and above all unnecessary, increase in the costs of offshore oil-producing systems. Also it cannot be used on already existing systems when the formation of undesirable deposit appears late on undersea piping, for it would necessitate the full replacement of the whole producing system including the fixed production equipment, thereby causing serious losses.

The equipment provided by the present invention is intended to eliminate such drawbacks. As an accessory module to a fluid control and carrying system, such as a Christmas tree of an oil-producing well, the equipment enables a pig to pass through long piping and to be recovered at a point close to where it was introduced.

Thus one great advantage of the present invention is its modular nature. As the module is added to an oil-producing assembly (for example, a Christmas tree), it can be installed on any equipment, even on those already in operation, provided their pipe diameters and connections are suitable. Thus, a pig return facility can be provided without expensive and complicated modifications to the internal design, of a Christmas tree for example.

GB-A-2166513 discloses equipment for accessing and maintaining a vertically upwardly extending stub of a pipeline system. In one embodiment this equipment is incorporated at both ends of a bridging pipe portion between two parallel pipelines, and in another embodiment the equipment is intended to provide access of a scraper to the vertical stub pipe.

The pipeline system of the present invention is characterized by the features of claim 1.

The pipeline pigging process of the present invention is characterized by the features of claim 4.

The present invention enables, particularly in offshore oil-producing systems, the use of just one design of production assembly (for example a Christmas tree), irrespective of the type of oil produced. The module provided in the present invention, coupled with said undersea assembly, creates a modular oil-producing system which may deal with large paraffin deposits. By contrast, the same modular system but without the module as defined herein, is suitable for the production of oil which has only slight, or even no, wax deposit, with the further advantage of using smaller-diameter piping for the ancillary and/or service lines, and thus with a significant reduction in investment.

In order that the present invention may more readily be understood the following description is given, merely by way of example, with reference to the accompanying drawings, in which:-
FIGURE 1 is a partial cross-section of an arrangement of the equipment of the present invention, in which the portions shown are only intended to define the function of the equipment; and

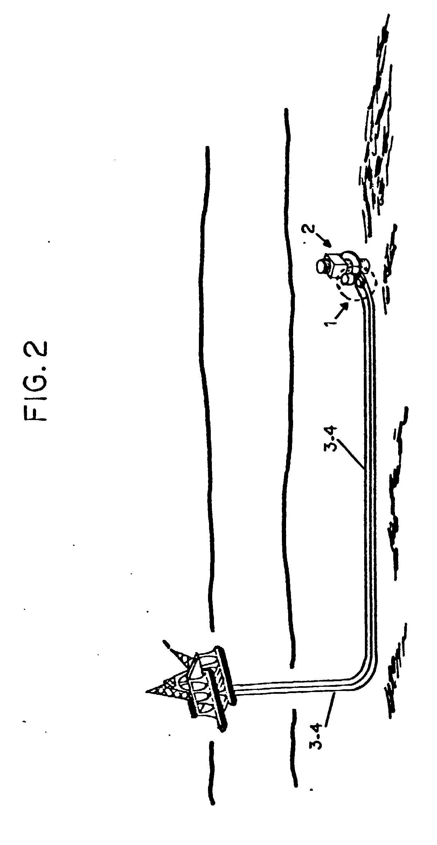

FIGURE 2 shows the equipment of the present invention installed in an offshore well for the purpose of enabling an evaluation of the relationship between the equipment and the assembly of oil-producing installations in an offshore well, although no specific constructive features are shown.

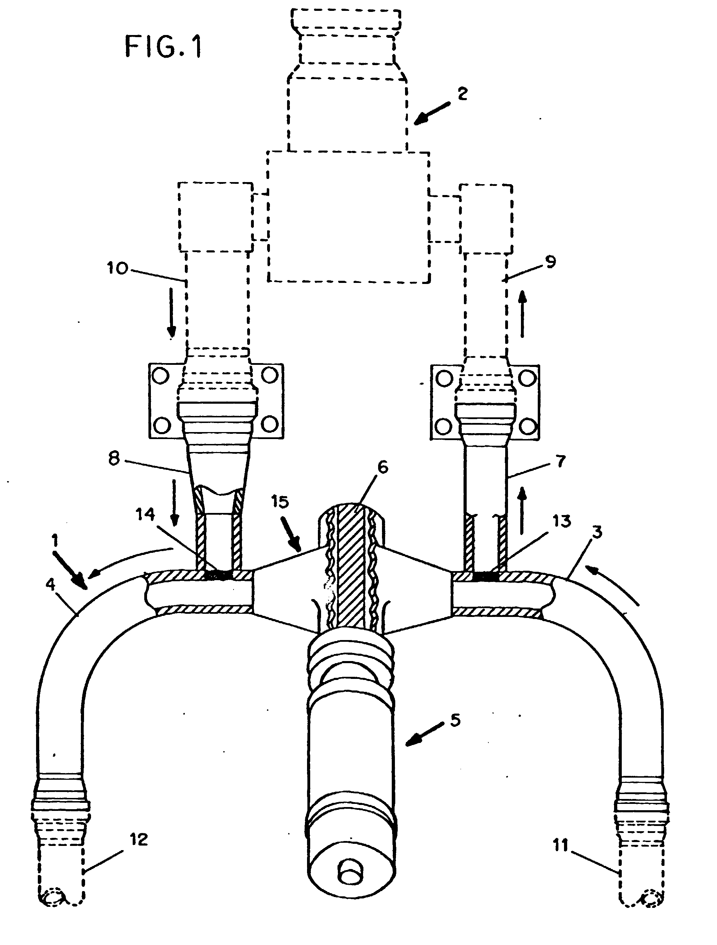

As can be seen in Figure 1, the equipment generally referenced 1 has connected to it portions of other devices represented by dotted lines. Thus, the equipment 1 is connected to a flow line mandrel 2 (utilized together with a Christmas tree), which will not be detailed because this is not the subject of the invention. The equipment 1 is equally in communication with external equipment (including a floating platform) by means of pipes 11 and 12, as will be described below.

Equipment 1 comprises a central body portion, 15 (represented in partial cross-section taken along the shell), where there is located a valve sealing member 6 controlled by a remote driving system forming therewith a valve 5, designed to be controlled from the surface to block free passage provided inside the central body portion 15 between branches 3 and 4 of the equipment 1 which provide communication between the central body portion 15 of the equipment and the outer portions thereof. Thus, branches 3 and 4 are lengths of pipe preferably provided with some curvature and having, on their free ends, connections for connecting to pipes 11 and 12 which may communicate with sources of fluid under pressure or with oil from the well. It will also be seen that two tubular branches 9 and 10 of the flow line device of a Christmas tree (shown in dotted lines) are connected to two branches 7 and 8 of the equipment 1, providing connections to allow fluid to flow into the well from outside and allowing product oil to flow from the well to outside (either to a production platform or a storage location). It is not essential that the fluid flow assembly should comprise pipes 11, 3, 7 and 9, or that the oil flow assembly should be pipes 12, 4, 8 and 10. However, suppose that assembly 10, 8, 4 and 12 is the one carrying oil from the well to outside. Thus, the flow of oil follows the direction (in a sequence) 10, 8, 4 and 12, while the fluid follows 11, 3 7 and 9.

The junctions of pipes 7 and 8 with curved pipes 3 and 4, respectively, are provided with respective bars 13 and 14 designed to prevent a pig sent from the curved branch 3 to the curved branch 4 when valve 5 is open, from deviating into either of the branch pipes 7 and 8. Thus we can see that if the branch comprising pipings 4, 12 and thence up to the platform (for example) is known to be obstructed by solids a pig can be sent from the outside, passing through pipe 11, into pipe 3, through valve 5 when the valve is open, into pipe 4, and then on to pipe 12 which extends to a point on the surface where the produced oil is normally collected, and here the material obstructing the free flow of oil, together with the entraining pig at the end of its travel, can also be collected. We have seen from the present description that the pig in this case follows a route close to the Christmas tree, returning from there to the place where it was launched. Although this description is very simple, it is possible to note that a number of important operational parameters are involved:
a) The entry of oil through the pipe branch 8 is preferably but not compulsorily stopped (such interruption can be made at any point along the pipe 8 or close to the Christmas tree, in pipe 10) to prevent high-pressure fluid from opposing the flow of oil;
b) passage through branch pipe 7, which exits from the curved pipe branch 3, is also interrupted, preferably when isolation between curved pipes 3 and 4 has been removed by opening the valve 5, and such interruption can be made at branch pipe 7 or branch pipe 8, close to the Christmas tree;
c) as we have seen, the pig will pass through the valve 5 (in the central body portion 15), by being pushed by pressure fluid into pipes 4, 12 and their extension;
d) it should be understood that the control for opening the closure member of valve 5, as well as for controlling members (not shown) which directly or indirectly close the flow to branch pipes 7 and 8, is carried out by control means operated from the surface, these means not being shown because they are not part of the present invention;
e) generally, the two pipes connecting the platform on the surface (for example) and the well, and also connecting the equipment 1 with such two operating stations are represented by pipe lengths 11 and 12 and their extension (not shown). This means that the pig, when launched by means of a high pressure fluid through the fluid line 11, will return to the central body portion 15 and push out the accumulated products ("wax"), thus "cleaning" the piping without requiring the removal of equipment.

Thus in the foregoing we have seen that it is possible to use, as the pig driving influence, the pressure of the fluid itself usually available in an oil well operation. This enables the internal "cleaning" of the piping without the extremely high cost of replacing already installed lines located in deep waters and/or of collection stations of ground wells located at great distances, and without the need of additional compressed fluid facilities.

From the foregoing description of only one preferred embodiment, all the advantages and the novelty of the present invention will become apparent as previously stated.

## Claims

1. A pipeline system comprising a flowline terminal; first and second lines (11 and 12); a pig launcher for introducing pigs into one of said first and second lines; and a module (1) at a first location in the pipeline system at an interconnection point between the two lines; wherein said module permits the pig to pass through it so that a pig can be launched, passed through said first line and said module at said first location, and returned back to the original launching site via said second line; wherein said module comprises curved first and second pipe sections (3) and (4) having end connectors for the connection to the flowlines (11) and (12) and also third and fourth pipe sections (7) and (8) with connections to the flowline terminal (2), guide bars (13) and (14) placed at the intersection point of said first and third pipe sections (7) and (3) and at the intersection point of the second and fourth pipe sections (4) and (8) in order to prevent a pig from entering the third and fourth pipe sections (7) and (8), and a normally closed valve element (6) operated by a control system and connected to said curved first and second pipe sections (3) and (4).

2. A pipeline system according to claim 1, wherein the module (1) is connected to an oil production system at the interconnection point of said first and second lines.

3. A pipeline system according to claim 2, wherein the oil production system is a Christmas Tree on which the module is mounted.

4. A method of pigging a pipeline system according to claim 1 which normally operates with communication between the first and third pipe sections (3 and 7) and between the second and fourth pipe sections (4 and 8) with the first and second pipe sections (3 and 4) isolated from one another by the valve element (6) being in a closed state, comprising launching a pig into said first line (11) and passing it through said first line to said module (1), and removing the isolation between the first and second pipe sections (3 and 4) by opening the normally closed valve element (6), thereby allowing the pig to return to the original launching site via said second line.

5. A method according to claim 4, including the step of interrupting passage through the third and fourth pipeline sections (7) and (8) during passage of the pig through the system.

6. A method according to claim 4 or 5, comprising using the normal pressure of the produced fluids to push the pig back to said original launching site at a platform.

7. A method according to claim 4, 5 or 6, wherein the produced fluids are oil and/or natural gas.

## Patentansprüche

1. Rohrleitungssystem, aufweisend eine Strömungsendableitung; erste und zweite Leitungen (11, 12); eine Molcheintrageinrichtung zum Einführen von Molchen in eine der ersten und zweiten Leitungen; und ein Modul (1) an einer ersten Stelle in dem Rohrleitungssystem an einem Verbindungspunkt zwischen den zwei Leitungen; wobei das Modul es ermöglicht, daß der Molch derart durch dieses hindurchläuft, daß ein Molch eingetragen werden kann, durch die erste Leitung und das Modul an der ersten Stelle laufengelassen wird und zu dem ursprünglichen Eintragort über die zweite Leitung rückgeführt wird; wobei das Modul gekrümmte erste und zweite Rohrabschnitte (3) und (4) aufweist, die Endanschlüsse zum Anschluß an die Strömungsleitungen (11) und (12) und außerdem dritte und vierte Rohrabschnitte (7) und (8) mit Anschlüssen zu der Strömungsendableitung (2) aufweist, Führungsstangen (13) und (14), die an dem Verbindungspunkt der ersten und dritten Rohrabschnitte (7) und (3) und an dem Verbindungspunkt der zweiten und vierten Rohrabschnitte (4) und (8) angeordnet sind, um zu verhindern, daß ein Molch in die dritten und vierten Rohrabschnitte (7) und (8) eintritt, und ein normalerweise geschlossenes Ventilelement (6), das durch ein Steuersystem betätigt und an die ersten und zweiten Rohrabschnitte (3) und (4) angeschlossen ist.

2. Rohrleitungssystem nach Anspruch 1, wobei das Modul (1) an ein Ölproduktionssystem an dem Verbindungspunkt der ersten und zweiten Leitungen angeschlossen ist.

3. Rohrleitungssystem nach Anspruch 2, wobei das Ölproduktionssystem ein Weihnachtsbaum ist, auf welchem das Modul angebracht ist.

4. Verfahren zum Reinigen eines Rohrleitungssystem mit einem Molch gemäß Anspruch 1, das normalerweise unter einer Verbindung zwischen den ersten und dritten Rohrabschnitten (3 und 7) und zwischen den zweiten und vierten Rohrabschnitten (4 und 8) abläuft, wobei die ersten und zweiten Rohrabschnitte (3 und 4) voneinander durch ein Ventilelement (6) isoliert sind, das sich in geschlossenem Zustand befindet, bei welchem Verfahren ein Molch in die erste Leitung (11) eingetragen und durch die erste Leitung zu dem Modul (1) geführt wird und bei dem Isolation zwischen den ersten und zweiten Rohrabschnitten (3 und 4) durch Öffnen des normalerweise geschlossenen Ventilelements (6) aufgehoben wird, wodurch der Molch zu dem ursprünglichen Eintragort über die zweite Leitung rückkehren kann.

5. Verfahren nach Anspruch 4, aufweisend den Schritt, den Durchlaß durch die dritten und vierten Rohrleitungsabschnitte (7) und (8) während des Durchlaufs des Molchs durch das System zu unterbrechen.

6. Verfahren nach Anspruch 4 oder 5, bei dem der normale Druck der erzeugten Fluide genutzt wird, um den Molch zurück an den ursprünglichen Eintragort an der Plattform zu stoßen.

7. Verfahren nach Anspruch 4, 5 oder 6, wobei die erzeugten Fluide Öl und/oder natürliches Gas sind.

## Revendications

1. Système de canalisation comprenant une tête de conduite d'écoulement; des première et seconde conduites (11 et 12); un lanceur de racleur destiné à introduire des racleurs dans l'une desdites première et seconde conduites; et un module (1) placé à un premier endroit dans le système de canalisation, à un point d'interconnexion entre les deux conduites ; dans lequel ledit module permet au racleur de passer à travers ce module, de façon qu'un racleur puisse être lancé, puisse traverser ladite première conduite et ledit module dans ledit premier endroit, et puisse être retourné vers le site de lancement initial via ladite seconde conduite dans lequel ledit module comprend des première et de deuxième sections de conduites courbes (3) et (4) portant des embouts de raccordement permettant le raccordement aux conduites d'écoulement (11) et (12), ainsi que des troisième et quatrième sections de conduite (7) et (8) comportant des raccordements à la tête (2) de conduite d'écoulement, des barres de guidage (13) et (14) placées au point d'intersection entre lesdites première et troisième sections de conduite (7) et (3) et au point d'intersection entre lesdites deuxième et quatrième sections de conduite (4) et (8) de manière à empêcher un racleur d'entrer dans les troisième et quatrième sections de conduite (7) et (8), et un élément de vanne (6) normalement fermé actionné par un système de commande et relié auxdites première et deuxième sections de conduite (3) et (4).

2. Système de canalisation selon la revendication 1, dans lequel le module (1) est relié à un système de production de pétrole au point d'interconnexion entre lesdites première et seconde conduites.

3. Système de canalisation selon la revendication 2, dans lequel le système de production de pétrole est un "arbre de noël" sur lequel est monté le module.

4. Procédé de raclage d'un système de canalisation selon la revendication 1, fonctionnant normalement en mettant les première et troisième sections de conduite (3 et 7) et les deuxième et quatrième sections de conduite (4 et 8) en communication les unes avec les autres, alors que les première et deuxième sections de conduite (3 et 4) étant isolées l'une de l'autre par l'élément de vanne (6) se trouvant à l'état fermé, ce procédé comprenant le lancement d'un racleur dans ladite première conduite (11) en le faisant passer à travers ladite première conduite jusqu'au dit module (1), et la suppression de l'isolement entre les première et deuxième sections de conduite (3 et 4) en ouvrant l'élément de vanne (6) normalement fermé, permettant ainsi au racleur de retoumer au site de lancement initial via ladite deuxième conduite.

5. Procédé selon la revendication 4, comprenant l'étape d'interruption du passage à travers les troisième et quatrième sections de canalisation (7) et (8) pendant le passage du racleur à travers le système.

6. Procédé selon la revendication 4 ou 5, comprenant le fait d'utiliser la pression normale des fluides produits pour pousser le racleur en arrière vers ledit site de lancement initial situé au niveau d'une plate-forme.

7. Procédé selon la revendication 4, 5 ou 6, dans lequel les fluides produits sont du pétrole et/ou du gaz naturel.
